Europäisches Patentamt

European Patent Office

Office européen des brevets

(19)

(11) **EP 0 620 789 B1**

(12) **EUROPÄISCHE PATENTSCHRIFT**

(45) Veröffentlichungstag und Bekanntmachung des Hinweises auf die Patenterteilung:
26.06.1996 Patentblatt 1996/26

(21) Anmeldenummer: 93923478.7

(22) Anmeldetag: 16.10.1993

(51) Int. Cl.$^6$: **B60T 13/68**, B60T 13/57

(86) Internationale Anmeldenummer:
PCT/EP93/02857

(87) Internationale Veröffentlichungsnummer:
WO 94/11226 (26.05.1994 Gazette 1994/12)

(54) **UNTERDRUCKBREMSKRAFTVERSTÄRKER**

VACUUM POWER BRAKE

SYSTEME D'ASSISTANCE DE FREINAGE A DEPRESSION

(84) Benannte Vertragsstaaten:
**DE ES FR GB IT PT**

(30) Priorität: 13.11.1992 DE 4238333
23.07.1993 DE 4324688

(43) Veröffentlichungstag der Anmeldung:
26.10.1994 Patentblatt 1994/43

(60) Teilanmeldung: 95110878.6

(73) Patentinhaber: **ITT Automotive Europe GmbH**
**D-60488 Frankfurt am Main (DE)**

(72) Erfinder:
• **BALZ, Jürgen**
**D-65187 Wiesbaden (DE)**
• **BILL, Karlheinz**
**D-63303 Dreieich (DE)**
• **KRÄMER, Horst**
**D-63128 Dietzenbach (DE)**
• **DROTT, Peter**
**D-65936 Frankfurt am Main (DE)**
• **BAUER, Jürgen**
**D-65187 Wiesbaden (DE)**

(56) Entgegenhaltungen:
EP-A- 0 140 187          EP-A- 0 478 396
US-A- 4 608 825

## Beschreibung

Die Erfindung betrifft einen Unterdruckbremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein eine auf die bewegliche Wand einwirkende Druckdifferenz steuerndes Steuerventil angeordnet ist, das durch eine Betätigungsstange betätigbar ist und aus einem im Steuergehäuse ausgebildeten ersten Dichtsitz und einem an einem durch die Betätigungsstange verschiebbaren Ventilkolben ausgebildeten zweiten Dichtsitz, die konzentrisch zueinander angeordnet sind, sowie einem elastisch verformbaren Ventilkörper besteht, wobei ein durch einen Elektromagneten betätigbarer, konzentrisch zu den Dichtsitzen angeordneter, beweglicher dritter Dichtsitz vorgesehen ist, der eine Belüftung der Arbeitskammer unabhängig von der Betätigungsstange ermöglicht.

Ein derartiger Unterdruckbremskraftverstärker ist z.B. aus der europäischen Patentanmeldung 0 478 396 A1 bekannt. Der den im Steuergehäuse geführten dritten Dichtsitz betätigende Elektromagnet ist bei dem vorbekannten Unterdruckbremskraftverstärker dem Steuergehäuse zugeordnet bzw. in dessen der Unterdruckkammer zugewandter Ausnehmung unbeweglich angeordnet. Bei einer Fremdbetätigung des Unterdruckbremskraftverstärkers durch den Elektromagneten erfolgt eine Relativbewegung zwischen dem Steuergehäuse bzw. dem dritten Dichtsitz und dem Ventilkolben, die einen Verlustweg bedeutet, der zusätzlich vom Elektromagneten zu überwinden ist, der bereits am Anfang der Fremdbetätigung eine hohe Betätigungskraft aufbringen muß, um das Steuerventil gegen die an seinem Ventilkörper auftretenden Kräfte zu öffnen.

Weniger vorteilhaft anzusehen sind auch die beim Einbau eines ins Verstärkergehäuse hineinragenden Hauptbremszylinders entstehenden Probleme, die nur durch Änderungen der Einbaumaße des Bremskraftverstärkers zu lösen sind.

Es ist daher Aufgabe der vorliegenden Erfindung, Maßnahmen vorzuschlagen, die eine erhebliche Reduzierung der vom Elektromagneten aufzubringenden Fremdbetätigungskraft ermöglichen.

Diese Aufgabe wird gemäß einer Ausführung erfindungsgemäß dadurch gelöst, daß der Elektromagnet mit dem Ventilkolben fest verbunden im Steuergehäuse verschiebbar angeordnet ist, so daß der dritte Dichtsitz mit dem Ventilkolben synchron bewegbar ist.

Zur Konkretisierung des Erfindungsgedankens sieht eine vorteilhafte Weiterbildung der Erfindung, bei der eine die Ausgangskraft des Unterdruckbremskraftverstärkers übertragende Druckstange unter Zwischenschaltung einer gummielastischen Reaktionsscheibe sich am Steuergehäuse abstützt, vor, daß der Elektromagnet in einer vorzugsweise topfförmigen axialen Verlängerung des Ventilkolbens angeordnet ist, die durch ein Verschlußteil verschlossen ist, das gleichzeitig eine Übertragung der an der Betätigungsstange eingeleiteten Eingangskraft auf die Reaktionsscheibe ermöglicht. Durch diese Maßnahme wird eine besonders kompakt bauende Ausführung des Erfindungsgegenstandes erreicht, die keine Vergrößerung ihrer axialen Baulänge benötigt und die eine sinnvolle Integration eines dem Unterdruckbremskraftverstärker nachgeschalteten Hauptbremszylinders im Verstärkergehäuse ermöglicht.

Um einen günstigen Verlauf der vom Elektromagneten erzeugten Feldlinien zu erreichen sieht eine andere vorteilhafte Weiterbildung des Erfindungsgegenstandes vor, daß der Anker des Elektromagneten teilweise im Verschlußteil geführt ist, wobei die Kraftübertragung zwischen dem dritten Dichtsitz und dem Anker mittels eines zylindrischen Stiftes erfolgt, an dem eine den dritten Dichtsitz tragende Kraftübertragungsplatte befestigt ist. Diese Maßnahmen ermöglichen eine Verringerung von durch Streuflüsse bzw. Radialkräfte verursachten magnetischen Verlusten.

Bei einer gewichtsoptimierten Ausführungsvariante des Erfindungsgegenstandes ist der dritte Dichtsitz an einem im Steuergehäuse abgedichtet geführten Ring ausgebildet ist, der mittels mindestens zweier vorzugsweise radial gegenüberliegender Haltearme mit der Kraftübertragungsplatte verbunden ist. Die Kraftübertragungsplatte kann dabei vorzugsweise rechteckig ausgebildet und in einer radialen Nut im Ventilkolben angeordnet sein.

Außerdem ist es sinnvoll, wenn der dritte Dichtsitz nach einem weiteren Erfindungsmerkmal radial zwischen den beiden Dichtsitzen angeordnet ist.

Eine einwandfreie Funktion des erfindungsgemäßen Bremskraftverstärkers, insbesondere beim Rücklauf der beweglichen Wand, wird bei einer weiteren vorteilhaften Ausführung dadurch gewährleistet, daß der dritte Dichtsitz gegenüber dem zweiten Dichtsitz axial versetzt angeordnet ist. Eine sichere Führung des Ankers kann bei einer anderen Ausgestaltung des Erfindungsgegenstandes erreicht werden, bei der der Stift im Verschlußteil sowie einem in der Verlängerung des Ventilkolbens angeordneten Führungsteil geführt ist.

Eine andere vorteilhafte Weiterbildung der Erfindung ist besonders für sogenannte leerwegverkürzte Unterdruckbremskraftverstärker geeignet, deren Ventilkolben über mit axialem Spiel im Steuergehäuse angeordnete Querglieder an verstärkergehäusefesten Anschlägen anliegen. Um sicherzustellen, daß das Löseverhalten eines solchen Unterdruckbremskraftverstärkers in der Druckabbauphase dem eines nicht fremdbetätigbaren Gerätes weitgehend entspricht, wird erfindungsgemäß vorgesehen, daß der dritte Dichtsitz in der Lösestellung vom Ventilkörper in einem Abstand angeordnet ist, der größer oder gleich dem Abstand zwischen dem Querglied und einer im Steuergehäuse ausgebildeten Anschlagfläche, die bei Betätigung ein Mitnehmen des Querglieds ermöglicht. Zum Zurückstellen des dritten Dichtsitzes in die Ausgangslage nach erfolgter Fremdbetätigung dient eine den Anker entgegen der Betätigungsrichtung des Elektromagneten vorspannende Feder zwischen dem Anker und dem Führungsteil angeordnet ist.

Um eine gesteuerte Bremsung bzw. eine gewünschte Verzögerung einzuleiten, sieht eine weitere vorteilhafte Ausführungsvariante der Erfindung vor, daß der dritte Dichtsitz lediglich im Sinne einer Trennung der Kammern betätigbar ist, wobei ein unabhängig vom Elektromagneten ansteuerbares Ventil vorgesehen ist, das eine Belüftung der Arbeitskammer unabhängig vom Steuerventil ermöglicht. Diese Maßnahmen ermöglichen eine saubere Trennung von zwei Funktionen, die sonst lediglich vom dritten Dichtsitz erfüllt werden müssen, so daß keine gepulste Regelung zum Realisieren einer Druckhaltephase erforderlich ist. Das als stromlos geschlossenes, pneumatisches Elektromagnetventil ausgebildete Ventil ist dabei vorzugsweise an der die Arbeitskammer begrenzenden Gehäusehälfte angeordnet, so daß eine zusätzliche Erhöhung der Funktionssicherheit des erfindungsgemäßen Unterdruckbremskraftverstärkers, insbesondere bei einem Stromausfall, erreicht wird.

Eine Verbesserung bzw. eine Optimierung des Verhältnisses zwischen der auf den zweiten Dichtsitz einwirkenden Rückstellkraft und der Ansprechkraft des erfindungsgemäßen Unterdruckbremskraftverstärkers wird bei einer anderen vorteilhaften Ausführung der Erfindung dadurch erreicht, daß der Ventilkörper im Steuergehäuse einen pneumatischen Raum begrenzt, der mit dem in der Arbeitskammer herrschenden pneumatischen Druck beaufschlagbar ist.

Ein besonders kurzer Strömungsweg bei einem Be- und Entlüften des pneumatischen Raumes buw. ein schneller Druckwechsel im pneumatischen Raum werden bei einer weiteren Ausgestaltung des Erfindungsgegenstandes dadurch erreicht, daß der Ventilkörper im Bereich seiner Dichtfläche mindestens einen Durchlaß aufweist, der eine Verbindung zwischen einem durch die Dichtsitze begrenzten, mit der Arbeitskammer verbundenen Ringraum und pneumatischen Raums bildet.

Eine weitere vorteilhafte Ausführungsform der Erfindung zeichnet sich schließlich dadurch aus, daß der Ventilkörper im Bereich seiner Dichtfläche eine radial innenliegende Dichtlippe aufweist, die zusammen mit einem den Ventilkörper im Steuergehäuse haltenden Haltering den pneumatischen Raum begrenzen. Durch diese Maßnahme wird eine wirksame Abdichtung des pneumatischen Druckausgleichsraum gewährleistet.

Um eine gezielte Dosierung der fremdgesteuerten, vom Elektromagnet aufzubringenden Bremskraft zu ermöglichen, sind bei einer weiteren Ausgestaltung der Erfindungsgegenstandes Mittel vorgesehen, die eine Erkennung der aktuellen Position des Ventilkörpers ermöglichen. Die durch diese Maßnahme erzielte Dosierung der fremdangesteuerten Bremskraft ist bei allen denkbaren Einsätzen notwendig, bei welchen nicht nur der maximale fremdansteuerbare Bremsdruck, sondern beispielsweise eine dosierte Haltephase des angesteuerten Betätigungszustandes, erwünscht ist.

Die erwähnten Mittel ermöglichen vorzugsweise eine direkte Sensierung des Betätigungsweges des Ventilkörpers. Bei der direkten Sensierung wird der Betätigungsweg des Ventilkörpers mittels eines Hall-Sensors ermittelt. Dabei sind zwei Ausführungsformen denkbar:

Bei der ersten Ausführung ist der Hall-Sensor im Steuergehäuse, vorzugsweise im Bereich des ersten Dichtsitzes, vorgesehen, und wirkt mit einem Permanentmagneten zusammen, der im Ventilkörper integriert ist. Bei der zweiten Ausführung ist der Hall-Sensor im Ventilkörper vorgesehen, während der Permanentmagnet im Steuergehäuse, vorzugsweise im Bereich des ersten Dichtsitzes, angeordnet ist.

Im Hinblick auf für die direkte Sensierung notwendige Änderungen am in Großserie hergestellten Ventilkörper wird weiter vorgeschlagen, Mittel vorzusehen, die eine indirekte Sensierung des Betätigungsweges des Ventilkörpers, vorzugsweise eine Sensierung des Betätigungsweges des Ankers des Elektromagneten ermöglichen. Zu diesem Zweck wird der Betätigungsweg eines den dritten Dichtsitz tragenden Ringes ermittelt, der mit einer mit dem Anker verbundenen Kraftübertragungsplatte zusammenwirkt. Erfindungsgemäß ist hierzu in der Kraftübertragungsplatte ein Permantmagnet angeordnet, der mit einem im Ventilkolben integrierten Hall-Sensor zusammenwirkt. Bei dieser Sensierungsart steht bis zum Anliegen des dritten Dichtsitzes am Ventilkörper keine proportionale Beziehung zum Betätigungsweg des Ventilkörpers, so daß dieser Bereich bei der Auswertung des Ausgangssignals des Hall-Sensors, beispielsweise mittels eines Mikrocontrollers, berücksichtigt werden muß.

Eine grundsätzliche weitere Möglichkeit der indirekten Sensierung besteht darin, daß Mittel vorgesehen sind, die eine Sensierung der magnetischen Flußdichte im Arbeitsluftspalt des Elektromagneten bei gleichzeitiger Messung des dem Elektromagneten zugeführten Stroms ermöglichen. Der Arbeitsluftspalt des Elektromagneten ist dabei vorzugsweise einerseits durch den Anker und andererseits durch ein innerhalb des Ventilkolbens ausgebildetes zylindrisches Führungsteil begrenzt.

Eine vorteilhafte Weiterbildung der letztgenannten Ausführung besteht darin, daß im Führungsteil auf seiner dem Anker zugewandten Seite ein analog arbeitenden Hall-Sensor angeordnet ist. Diese Maßnahme ermöglicht eine kontinuierliche Erfassung der Flußdichte des Elektromagneten.

Um die Verminderung der zum Aufbringen der Elektromagnetkraft erforderlichen Stirnfläche des Führungsteiles zu verhindern, sieht eine weitere Ausgestaltung des Erfindungsgegenstandes vor, daß der Hall-Sensor im Rückschluß des Elektromagneten angeordnet, vorzugsweise in der Wand einer den Elektromagneten aufnehmenden, zylindrischen Verlängerung des Ventilkolbens integriert ist.

Um ein sicheres Abschalten des Elektromagneten, insbesondere nach Beendigung einer fremdkraftunterstützten Bremsung zu gewährleisten, liegt der Ventilkolben bei einer weiteren Ausgestaltung des Erfindungsgegenstandes an einer die Ausgangskraft des Unterdruckbremskraftverstärkers übertragenden Reaktionscheibe mittels einer im Steuergehäuse axial begrenzt bewegbar gelagerten Übersetzungsscheibe axial an, deren Bewegung entgegen der Betätigungsrichtung des Unterdruckbremskraftverstärkers durch einen im Steuergehäuse ausgebildeten Anschlag (Ringfläche) begrenzt wird, der eine weitere Bewegung des Ventilkolbens entgegen der Betätigungsrichtung zuläßt.

Eine Erleichterung der Montage des erfindungsgemäßen Unterdruckbremskraftverstärkers wird schließlich dadurch erreicht, daß das Steuergehäuse zweiteilig ausgebildet ist und ein Vorderteil aufweist, das mit einem das Steuerventil aufnehmenden Führungsteil formschlüssig verbunden ist und das Kraftabgabeglied (Druckstange), die Reaktionscheibe sowie die Übersetzungsscheibe aufnimmt.

Die Erfindung wird in der nachfolgenden Beschreibung an fünf Ausführungsbeispielen im Zusammenhang mit der beiliegenden Zeichnung näher erläutert. In der Zeichnung zeigt:

Fig. 1     eine erste Ausführung des erfindungsgemäßen Unterdruckbremskraftverstärkers im Längsschnitt, teilweise weggebrochen;

Fig. 2     eine modifizierte, zweite Ausführung des erfindungsgemäßen Unterdruckbremskraftverstärkers in einer der Fig. 1 entsprechenden Darstellung;

Fig. 3     eine dritte Ausführung des erfindungsgemäßen Unterdruckbremskraftverstärkers in einer der Fig. 1 entsprechenden Darstellung;

Fig. 4     eine vierte Ausführung des erfindungsgemäßen Unterdruckbremskraftverstärkers in einer der Fig. 1 entsprechenden Darstellung;

Fig. 5     eine fünfte Ausführung des erfindungsgemäßen Unterdruckbremskraftverstärkers in einer der Fig. 1 entsprechenden Darstellung.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen, nicht gezeigten Verstärkergehäusehälfte angebracht ist.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine zweite Druckfeder 27 vorgesehen, die einerseits an der Betätigungsstange 7 und andererseits am Haltering 21 abgestützt ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

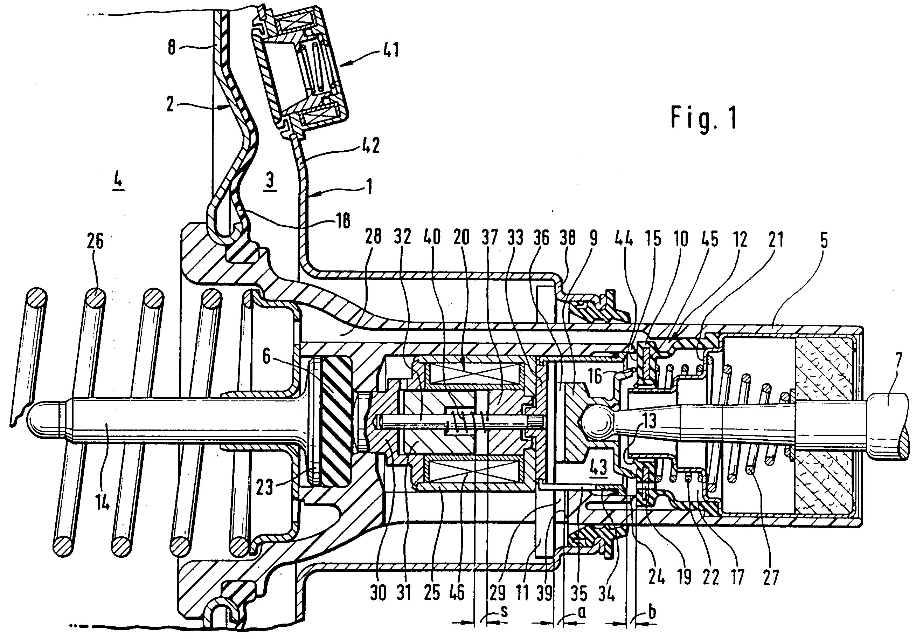

Wie der Fig. 1 weiter zu entnehmen ist, weist der Ventilkörper 10 eine mit den beiden Dichtsitzen 15,16 zusammenwirkende ringförmige Dichtfläche 44 auf, die mittels einer metallischen Versteifungsscheibe 45 versteift ist und mit mehreren axialen Durchlässen 19 versehen ist. An die Dichtfläche 44 schließt radial innen eine Dichtlippe 13 an, die im montierten Zustand des Ventilkörpers 10 im Steuergehäuse 5 an dessen Innenwand bzw. dem vorhin erwähnten, den Ventilkörper 10 haltenden Haltering 21 dichtend anliegt, so daß im Steuergehäuse 5 ein pneumatischer Raum 17 begrenzt ist. Die durch die Durchlässe 19 und Öffnungen gebildeten, näher nicht bezeichneten Strömungskanäle verbinden den pneumatischen Raum 17 mit einem durch die Dichtsitze 15,16 begrenzten Ringraum 43, in dem der oben erwähnte pneumatische Kanal 29 mündet, so daß der auf der der Dichtfläche 44 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Die beschriebene Anordnung ermöglicht demnach eine Verringerung der Differenz zwischen der Ansprechkraft des Unterdruckbremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

Um eine von der Betätigungsstange 7 unabhängige Fremdbetätigung des erfindungsgemäßen Unterdruckbremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einer axialen topfförmigen Verlängerung 25 des Ventilkolbens 9 angeordnet ist und demnach zusammen mit dem Ventilkolben 9 im Steuergehäuse 5 verschiebbar ist. Der Elektromagnet 20 besteht aus einer auf einem innerhalb der Verlängerung 25 befestigten Führungsteil 37 aufgesteckten Spule 46 sowie einem darin verschiebbar angeordneten zylindrischen Anker 31, der mit einem Stift 32 unlösbar verbunden ist, der einerseits im Führungsteil 37 und andererseis in einem die Verlängerung 25 verschließenden Verschlußteil 30 geführt wird. Durch den Anker 31 einerseits und das Führungsteil 37 andererseits wird ein Arbeitsluftspalt 51 des Elektromagneten 20 begrenzt. An seinem der Betätigungsstange 7 zugewandten Ende trägt der Stift 32 eine Kraftübertragungsplatte 33, die vorzugsweise rechteckig ausgebildet und in einer radialen Nut 36 des Ventilkolbens 9 angeordnet ist und die eine Übertragung der vom Elektromagneten 20 aufgebrachten Fremdbetätigungskraft auf den dritten Dichtsitz 24 ermöglicht. Der dritte Dichtsitz 24 ist zu diesem Zweck an einem im Steuergehäuse 5 abgedichtet geführten Ring 34 ausgebildet, der mittels zweier bzw. mehrerer Haltearme 35 mit der Kraftübertragungsplatte 33 verbunden ist. Zwischen dem teilweise ins Verschlußteil 30 hineinragenden Anker 31 und dem Führungsteil 37 ist eine Druckfeder 40 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt (s. Abstand b) angeordnet ist. Das im Steuergehäuse 5 geführte Verschlußteil 30 liegt an der vorhin erwähnten Reaktionsscheibe 6 an und ermöglicht eine Übertragung der an der Betätigungsstange 7 eingeleiteten Eingangskraft auf die Reaktionsscheibe 7.

Bei einer durch Bestromen der Spule 46 eingeleiteten Fremdbremsung wird der Anker 31 entgegen der Kraft der Druckfeder 40 in der Zeichnung nach rechts verschoben, wodurch der dritte Dichtsitz 24 zunächst nach Überbrückung des Abstandes "b" an der Dichtfläche 44 des Ventilkörpers 10 zur Anlage kommt. Durch diese Anlage wird der am Steuergehäuse 5 ausgebildete erste Dichtsitz 15 wirkungsmäßig überbrückt, so daß keine Verbindung zwischen Unterdruckkammer 4 und Arbeitskammer 3 mehr besteht. Anschließend bewegen sich der dritte Dichtsitz 24 und der Ventilkörper 10 zusammen weiter, wobei der zweite Dichtsitz 16 geöffnet und die Arbeitskammer 3 belüftet wird. Die Bewegung des dritten Dichtsitzes 24 dauert so lange, bis der Anker 31 am Führungsteil 37 anschlägt und der Spalt "s" zwischen den beiden Teilen zu Null wird. Bei fehlender Betätigungskraft an der Betätigungsstange 7 läuft das Steuergehäuse 5 relativ zum Ventilkolben 9 um einen Weg vor, der dem Abstand "a" zwischen dem Querglied 11 und einer am Steuergehäuse 5 ausgebildeten Anschlagfläche 39 entspricht. Ursache hierfür ist die Kolbenstangenrückholfeder 27, die über die Betätigungsstange 7 den Ventilkolben 9 nach rechts bewegt und versucht, den zweiten Dichtsitz 16 wieder zu schließen. Da sich aber der dritte Dichtsitz 24 auf Grund der festen Verbindung vom Elektromagnet 20 und Ventilkörper 9 synchron mitbewegt, wird der Spalt zwischen dem Ventilkörper 10 und dem zweiten Dichtsitz 16 offengehalten, und zwar um das Maß s-b. Hierdurch wird die Arbeitskammer 3 mit der Atmosphäre verbunden und es wird eine Bremskraft in den Hauptzylinder ermöglicht.

Eine Druckhaltephase kann entweder durch wechselweises Einund Ausschalten oder eine analoge Regelung des Elektromagneten 20 erreicht werden. Nach einem Ausschalten des Elektromagneten 20 bewegt sich der Anker 31 mit dem dritten Dichtsitz 24 unter der Wirkung der Feder 40 nach links, wodurch der dritte Dichtsitz 24 geöffnet wird, während der durch die Steuerventilfeder 22 vorgespannte Ventilkörper 10 den zweiten Dichtsitz 16 schließt. Da der erste Dichtsitz 15 - wie oben erwähnt - weiterhin offen bleibt, wird über die offene Verbindung zwischen Unterdruckkammer 4 und Arbeitskammer 3 aus der letzteren die Atmosphäre abgesaugt, so daß der im Hauptzylinder herrschenden Druck abgebaut wird. Anschließend wird nach einem sehr kurzen zeitlichen Abstand der Elektromagnet 20 erneut bestromt, so daß im Hauptzylinder wieder ein Druckaufbau stattfindet. Durch die Trägheit des Systems während des Be- und Entlüftens der Arbeitskammer 3 läßt sich somit ein gewünschter Druckwert durch eine gepulste Ansteuerung der Elektromagneten 20 realisieren.

Die Druckabbauphase wird durch ein Abschalten des Elektromagneten 20 realisiert, bei dem der dritte Dichtsitz 24 geöffnet und der zweite Dichtsitz 16 geschlossen wird. Über den offenen ersten Dichtsitz 15 wird die Arbeitskammer 3 so lange entlüftet, bis die Rückstellfeder 26 die Steuergruppe in ihre Ausgangslage zurückstellt und das Querglied 11 am Anschlag 38 zur Anlage kommt. Das Steuergehäuse 5 kann sich so lange bewegen, bis es auf der in der Zeichnung linken Seite des Querglieds 11 zur Anlage kommt und der erste Dichtsitz 15 geschlossen wird. Das Gerät ist dann in Lösestellung.

Eine weitere Ausführungsform der Erfindung besteht in einer anderen Alternative der Fremdbetätigung, bei der die Funktion des vorhin beschriebenen Elektromagneten 20 mit der eines zusätzlich verwendeten Ventils 41 kombiniert wird. Das als stromlos geschlossenes pneumatisches Elektromagnetventil ausgebildete Ventil 41, das vorzugsweise an der die Arbeitskammer 3 begrenzenden Gehäusehälfte 42 des Verstärkergehäuses 1 angeordnet ist und unabhängig vom Steuerventil 12 eine Belüftung der Arbeitskammer 3 ermöglicht, ist unabhängig vom Elektromagenten 20 angesteuert werden. Der dritte Dichtsitz 24 dient bei dieser Ausführung lediglich einer Trennung der Kammern 3,4, indem er am Ventilkörper 10 zur Anlage kommt.

Bei einer Fremdbremsung werden sowohl der Elektromagnet 20 als auch das Elektromagnetventil 41 bestromt. Durch das Öffnen des letzteren kann die Atmosphäre in die Arbeitskammer 3 hineinströmen, während deren Verbindung zur Unterdruckkammer 4 durch den geschlossenen dritten Dichtsitz 24 geschlossen gehalten wird.

Durch ein Abschalten das Elektromagnetventils 41 nach Erreichen eines gewünschten Druckwertes wird sein nicht näher bezeichneter Dichtsitz geschlossen, so das der momentane Zustand erhalten bleibt und eine Druckhaltephase realisiert wird.

Wird auch der Elektromagnet 20 ausgeschaltet, so erfolgt der Druckabbau auf die gleiche Art und Weise, wie oben bereits erläutert wurde.

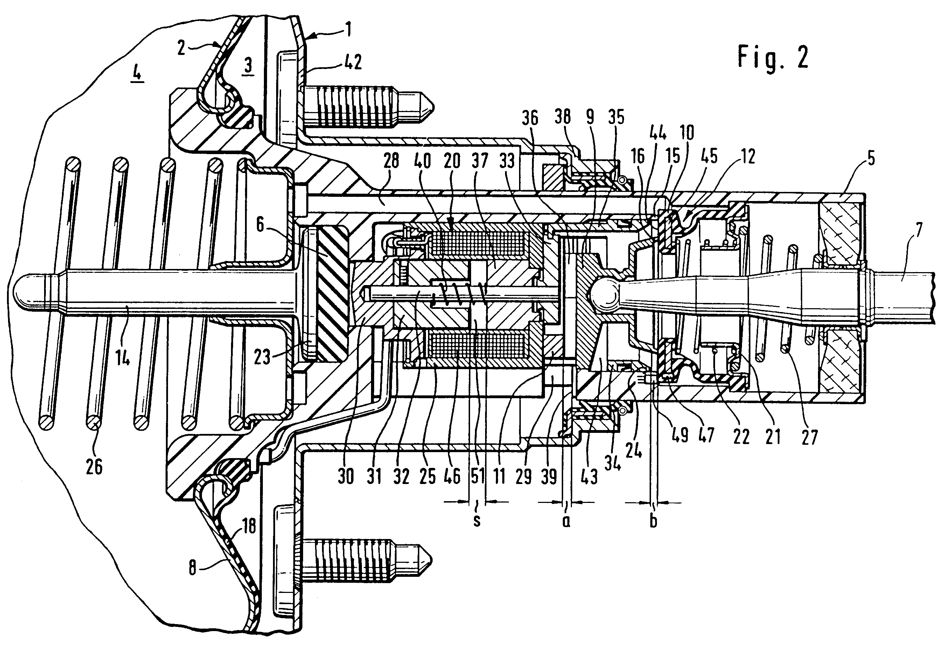

Wie insbesondere Fig. 2 zu entnehmen ist, sind bei einer darin gezeigten zweiten Ausführung des erfindungsgemäßen Unterdruckbremskraftverstärkers Mittel vorgesehen, die eine direkte Sensierung des Betätigungsweges des Ventilkörpers 10 des Steuerventils 12 ermöglichen. Die erwähnten Mittel bestehen aus einem Hall-Sensor 49, der durch Änderungen des Betätigungsweges des Ventilkörpers 10 bedingte Änderungen des Magnetfeldes eines Permanentmagneten 47 erfaßt. Während der Hall-Sensor 49 bei der dargestellten Ausführung im Bereich des am Steuergehäuse 5 ausgebildeten ersten Dichtsitzes 15 vorgesehen und der Permanentmagnet 47 dem Hall-Sensor (49) axial gegenüberliegend im Ventilkörper 10 integriert ist, ist auch eine nicht gezeigte andere Ausführungsvariante denkbar, bei der der Hall-Sensor im Ventilkörper und der Permanentmagnet im Steuergehäuse angeordnet sind.

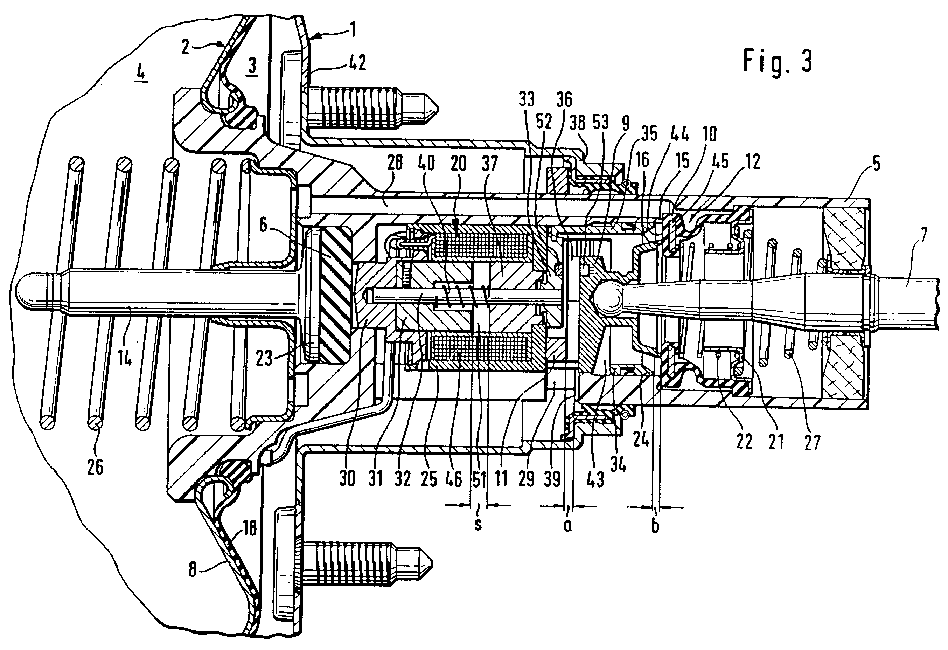

Bei den in Fig. 3, 4 und 5 gezeigten Ausführungsbeispielen sind Mittel vorgesehen, die eine indirekte Ermittlung des Betätigungsweges des Ventilkörpers 10 ermögichen. Die Ermittlung erfolgt durch eine Sensierung des Betätigungsweges des Ankers 31 des Elektromagneten 20.

So zeigt Fig. 3 eine indirekte Messung des erwähnten Betätigungsweges an dem den dritten Dichtsitz 24 tragenden Ring 34, bei der der absolute Weg des Elektromagnetankers 31 gegen den Ventilkolben 9 gemessen wird. Zu diesem Zweck ist in der Kraftübertragungsplatte 33 ein zweiter Permanentmagnet 52 integriert, während im Ventilkolben 9, dem Permanentmagneten 52 axial gegenüberliegend, ein zweiter Hallsensor 53 angeordnet ist. Da sich jedoch der dritte Dichtsitz 24 in Ruhestellung im Abstand vom Ventilkörper 10 befindet, besteht bis zur Berührung zwischen dem dritten Dichtsitz 24 und dem Ventilkörper 10 keine proportionale Beziehung zu dessen Betätigungsweg. Dieser Tatsache ist bei der Auswertung der Hall-Sensorsignale Rechnung zu tragen.

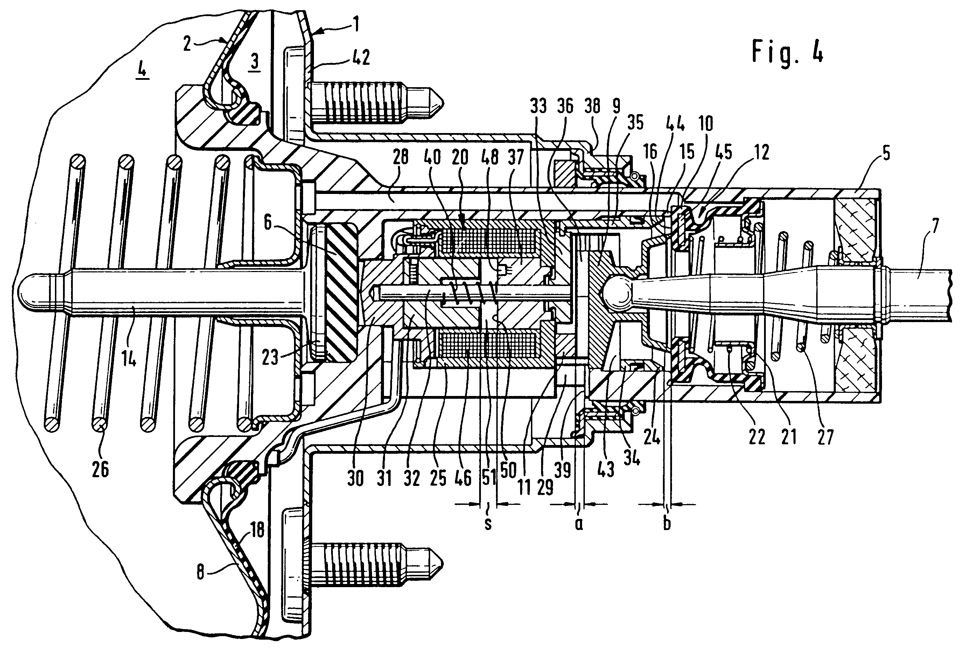

Eine grundsätzlich weitere Möglichkeit besteht in der Sensierung der Magnetflußdichte B des zur Steuerventil-Fremdbetätigung genutzten Elektromagneten 20, durch die auf die aktuell herrschende Größe "s" des Arbeitsluftspaltes 51 geschlossen werden kann. Da die Magnetflußdichte B unter anderem von dem dem Elektromagneten 20 zugeführten Strom I abhängig ist, muß gleichzeitig eine Messung der Stromwerte durchgeführt werden. So zeigt Fig. 4 eine Anordnung, bei der die Flußdichte B im Arbeitsluftspalt 51 des Elektromagneten 20 sensiert wird. Ein analog arbeitender Hall-Sensor 48 ist im Arbeitsluftspalt 41 so angeordnet, daß die Flußdichte des Elektromagneten 20 kontinuierlich erfaßt werden kann. Der Hall-Sensor 48 ist dabei vorzugsweise in der dem Elektromagnetanker 31 zugewandten Stirnfläche 50 des vorhin erwähnten Führungsteiles 37 integriert.

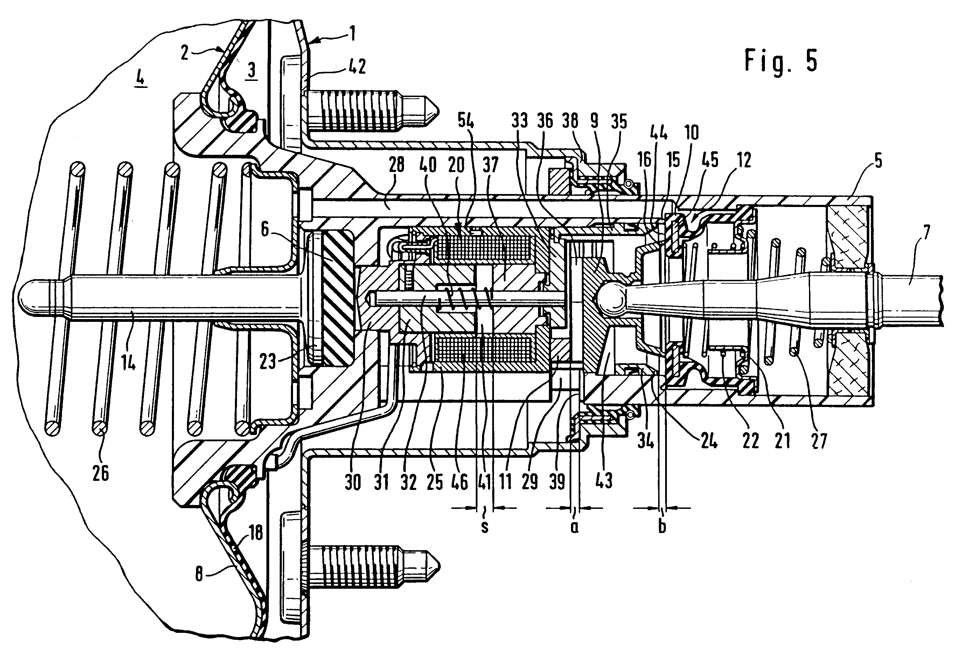

Eine bessere Ausnutzung, insbesondere der mit dem Elektromagnetanker 31 zusammenwirkenden Stirnfläche 50 des Führungsteiles 37 zeigt Fig. 5. Bei der darin gezeigten Ausführung ist ein ebenso analog arbeitender Hall-Sensor 54 im Rückschluß des Elektromagneten 20 angeordnet, insbesondere in der Wand der den Elektromagneten 20 aufnehmenden topfförmigen Verlängerung 25 des Ventilkolbens 9 integriert.

Der Zusammenhang zwischen der magnetischen Flußdichte B, dem dem Elektromagneten 20 zugeführten Strom I und der Größe "s" des Arbeitsluftspaltes 41 läßt sich folgendermaßen darstellen:

$$B = f\,(I,s)$$

Bezugszeichenliste:

| | |
|---|---|
| 1 | Verstärkergehäuse |
| 2 | bewegliche Wand |
| 3 | Arbeitskammer |
| 4 | Unterdruckkammer |
| 5 | Steuergehäuse |
| 6 | Reaktionsscheibe |
| 7 | Betätigungsstange |
| 8 | Membranteller |
| 9 | Ventilkolben |
| 10 | Ventilkörper |
| 11 | Querglied |
| 12 | Steuerventil |
| 13 | Dichtlippe |
| 14 | Druckstange |
| 15 | Dichtsitz |
| 16 | Dichtsitz |
| 17 | Raum |
| 18 | Rollmembran |
| 19 | Durchlaß |
| 20 | Elektromagnet |
| 21 | Haltering |
| 22 | Ventilfeder |
| 23 | Kopfflansch |
| 24 | Dichtsitz |
| 25 | Verlängerung |
| 26 | Rückstellfeder |

27 Kolbenstangenrückholfeder
28 Kanal
29 Kanal
30 Verschlußteil
31 Anker
32 Stift
33 Kraftübertragungsplatte
34 Ring
35 Haltearm
36 Nut
37 Führungsteil
38 Anschlag
39 Anschlagfläche
40 Feder
41 Ventil
42 Gehäusehälfte
43 Ringraum
44 Dichtfläche
45 Versteifungsscheibe
46 Spule
47 Permanentmagnet
48 Hall-Sensor
49 Hall-Sensor
50 Stirnfläche
51 Arbeitsluftspalt
52 Permanentmagnet
53 Hall-Sensor
54 Hall-Sensor

**Patentansprüche**

1. Unterdruckbremskraftverstärker für Kraftfahrzeuge mit einem Verstärkergehäuse (1), dessen Innenraum durch eine bewegliche Wand (2) in eine Unterdruckkammer (4) und eine Arbeitskammer (3) unterteilt ist, sowie mit einem die bewegliche Wand (2) tragenden Steuergehäuse (5), in dem ein eine auf die bewegliche Wand (2) einwirkende Druckdifferenz steuerndes Steuerventil (12) angeordnet ist, das durch eine Betätigungsstange (7) betätigbar ist und aus einem im Steuergehäuse ausgebildeten ersten Dichtsitz (15) und einem an einem durch die Betätigungsstange (7) verschiebbaren Ventilkolben (9) ausgebildeten zweiten Dichtsitz (16), die konzentrisch zueinander angeordnet sind, sowie einem elastisch verformbaren Ventilkörper (10) besteht, wobei ein durch einen Elektromagneten (20) betätigbarer, konzentrisch zu dem ersten und dem zweiten Dichtsitz (15, 16) angeordneter, beweglicher dritter Dichtsitz (24) vorgesehen ist, der eine Belüftung der Arbeitskammer (3) unabhängig von der Betätigungsstange (7) ermöglicht, dadurch **gekennzeichnet,** daß der Elektromagnet (20) mit dem Ventilkolben (9) fest verbunden im Steuergehäuse (5) verschiebbar angeordnet ist, so daß der dritte Dichtsitz (24) mit dem Ventilkolben (9) synchron bewegbar ist.

2. Unterdruckbremskraftverstärker nach Anspruch 1, mit einer seine Ausgangskraft übertragenden Druckstange (14), die unter Zwischenschaltung einer gummielastischen Reaktionsscheibe (6) sich am Steuergehäuse abstützt, dadurch **gekennzeichnet,** daß der Elektromagnet (20) in einer vorzugsweise topfförmigen axialen Verlängerung (25) des Ventilkolbens (9) angeordnet ist, die durch ein Verschlußteil (30) verschlossen ist, das gleichzeitig eine Übertragung der an der Betätigungsstange (7) eingeleiteten Eingangskraft auf die Reaktionsscheibe (6) ermöglicht.

3. Unterdruckbremskraftverstärker nach Anspruch 1 oder 2, dadurch **gekennzeichnet,** daß der Anker (31) des Elektromagneten (20) teilweise in das Verschlußteil (30) hineinragt, wobei die Kraftübertragung zwischen dem dritten Dichtsitz (24) und dem Anker (31) mittels eines zylindrischen Stiftes (32) erfolgt, an dem eine den dritten Dichtsitz (24) tragende Kraftübertragungsplatte (33) be- festigt ist.

4. Unterdruckbremskraftverstärker nach einem der vorhergehenden Ansprüche, dadurch **gekennzeichnet,** daß der dritte Dichtsitz (24) an einem im Steuergehäuse (5) abgedichtet geführten Ring (34) ausgebildet ist, der mittels mindestens zweier vorzugsweise radial gegenüberliegender Haltearme (35) mit der Kraftübertragungsplatte (33) verbunden ist.

5. Unterdruckbremskraftverstärker nach Anspruch 3, dadurch **gekennzeichnet,** daß die Kraftübertragungsplatte (33) rechteckig ausgebildet und in einer radialen Nut (36) im Ventilkolben (9) angeordnet ist.

6. Unterdruckbremskraftverstärker nach einem der vorhergehenden Ansprüche, dadurch **gekennzeichnet,** daß der dritte Dichtsitz (24) radial zwischen den beiden Dichtsitzen (15,16) angeordnet ist.

7. Unterdruckbremskraftverstärker nach einem der vorhergehenden Ansprüche, dadurch **gekennzeichnet,** daß der dritte Dichtsitz (24) gegenüber dem zweiten Dichtsitz (16) axial versetzt angeordnet ist.

8. Unterdruckbremskraftverstärker nach einem der vorhergehenden Ansprüche, dadurch **gekennzeichnet,** daß der Stift (32) im Verschlußteil (30) sowie einem in der Verlängerung (25) des Ventilkolbens (9) angeordneten Führungsteil (37) geführt ist.

9. Unterdruckbremskraftverstärker nach einem der vorhergehenden Ansprüche, wobei der Ventilkolben über ein mit axialem Spiel im Steuergehäuse angeordnetes Querglied an einem Verstärkergehäusefesten Anschlag anliegt, dadurch **gekennzeichnet,** daß der dritte Dichtsitz (24) in der Lösestellung vom Ventilkörper (10) in einem Abstand (b) ange- ordnet ist, der größer oder gleich dem Abstand (a) zwischen dem Querglied (11) und einer im Steuergehäuse (5) ausgebildeten Anschlagfläche (39) ist, die bei Betätigung ein Mitnehmen des Querglieds (11) ermöglicht.

10. Unterdruckbremskraftverstärker nach Anspruch 8 oder 9, dadurch **gekennzeichnet,** daß zwischen dem Anker (31) und dem Führungsteil (37) eine den Anker (31) entgegen der Betätigungsrichtung des Elektromagneten (20) vorspannende Feder (40) angeordnet ist.

11. Unterdruckbremskraftverstärker nach dem Oberbegriff des Anspruches 1, dadurch **gekennzeichnet,** daß der dritte Dichtsitz (24) lediglich im Sinne einer Trennung der Kammern (3,4) betätigbar ist, wobei ein unabhängig vom Elektromagneten (20) ansteuerbares Ventil (41) vorgesehen ist, das eine Belüftung der Arbeitskammer (3) unabhängig vom Steuerventil (12) ermöglicht.

12. Unterdruckbremskraftverstärker nach Anspruch 11, wobei das Verstärkergehäuse aus zwei miteinander verbundenen Gehäusehälften besteht, dadurch **gekennzeichnet,** daß das Ventil (41) an der die Arbeitskammer (3) begrenzenden Gehäuse- hälfte (42) angeordnet ist.

13. Unterdruckbremskraftverstärker nach Anspruch 11 oder 12, dadurch **gekennzeichnet,** daß Ventil (41) als ein stromlos geschlossenes, pneuma- tisches Elektromagnetventil ausgebildet ist.

14. Unterdruckbremskraftverstärker nach einem der vorhergehenden Ansprüche 1 bis 10, dadurch **gekennzeichnet,** daß der Ventilkörper (10) im Steuergehäuse (5) einen pneumatischen Raum (17) begrenzt, der mit dem in der Arbeitskammer (3) herrschenden pneumatischen Druck beaufschlagt ist.

15. Unterdruckbremskraftverstärker nach Anspruch 14, dadurch **gekennzeichnet,** daß der Ventilkörper (10) im Bereich seiner Dichtfläche mindestens einen Durchlaß (19) aufweist, der eine Verbindung zwischen einem durch die Dichtsitze (15,16) begrenzten, mit der Arbeitskammer (3) verbundenen Ringraum (43) und dem pneumatischen Raum (17) bildet.

16. Unterdruckbremskraftverstärker nach Anspruch 14 oder 15, dadurch **gekennzeichnet,** daß der Ventilkörper (10) im Bereich seiner Dichtfläche eine radial innenliegende Dichtlippe (13) aufweist, die zusammen mit einem den Ventilkörper (10) im Steuergehäuse (5) haltenden Haltering (21) den pneumatischen Raum (17) begrenzen.

17. Unterdruckbremskraftverstärker nach einem der vorhergehenden Ansprüche, dadurch **gekennzeichnet,** daß Mittel (47,48,49, 52, 53, 54) vorgesehen sind, die eine Erkennung der aktuellen Position des Ventilkörpers (10) ermöglichen.

18. Unterdruckbremskraftverstärker nach Anspruch 17, dadurch **gekennzeichnet,** daß Mittel (47,49) vorgesehen sind, die eine direkte Sensierung des Betätigungsweges des Ventilkörpers (10) ermöglichen.

19. Unterdruckbremskraftverstärker nach Anspruch 18, dadurch **gekennzeichnet,** daß im Steuergehäuse (5), vorzugsweise im Bereich des ersten Dichtsitzes (15) ein Hall-Sensor (49) integriert ist, der mit einem im Ventilkörper (10) angeordne ten Permanentmagneten (47) zusammenwirkt.

20. Unterdruckbremskraftverstärker nach Anspruch 18, dadurch **gekennzeichnet,** daß im Ventilkörper (10) ein Hall-Sensor vorgesehen ist, der mit einem im Steuergehäuse (5), vorzugsweise im Bereich des ersten Dichtsitzes (15) angeordneten Permanentmagneten zusammenwirkt.

21. Unterdruckbremskraftverstärker nach Anspruch 17, dadurch **gekennzeichnet,** daß Mittel (48, 52, 53, 54) vorgesehen sind, die eine indirekte Sensierung des Betätigungsweges des Ven- tilkörpers (10), vorzugsweise eine Sensierung des Betätigungsweges des Ankers (31) des Elektromagneten (20) ermöglichen.

22. Unterdruckbremskraftverstärker nach Anspruch 21, wobei der dritte Dichtsitz an einem im Steuergehäuse abgedichtet geführten Ring ausgebildet ist, der an einer mit dem Anker in kraftübertragender Verbindung stehenden Kraftübertragungsplatte befestigt ist, dadurch **gekennzeichnet,** daß in der Kraftübertragungsplatte (33) ein Permanentmagnet (52) vorgesehen ist, der mit einem im Ventilkolben (9) angeordneten Hall-Sensor (52) zusammenwirkt.

23. Unterdruckbremskraftverstärker nach Anspruch 21, dadurch **gekennzeichnet,** daß Mittel (48,54) vorgesehen sind, die eine Sensierung der magnetischen Flußdichte im Arbeitsluftspalt (51) des Elektromagneten (20) bei gleichzeitiger Messung des dem Elektromagneten (20) zugeführten Stroms ermöglichen.

24. Unterdruckbremskraftverstärker nach Anspruch 23, wobei der Arbeitsluftspalt des Elektromagneten zwischen dem Anker und einem innerhalb des Ventilkolbens angeordneten Führungsteil ausgebildet ist, dadurch **gekennzeichnet,** daß im Führungsteil (37) auf seiner dem Anker (31) zugewandten Seite ein analog arbeitender Hall-Sensor (48) angeordnet ist.

25. Unterdruckbremskraftverstärker nach Anspruch 23, dadurch **gekennzeichnet**, daß im Rückschluß des Elektromagneten (20) ein Hall-Sensor (54) angeordnet ist.

26. Unterdruckbremskraftverstärker nach Anspruch 25, wobei der Elektromagnet in einer Verlängerung des Ventilkolbens angeordnet ist, dadurch **gekennzeichnet**, daß der Hall-Sensor (54) in der Wand der Verlängerung (25) integriert ist.

27. Unterdruckbremskraftverstärker nach einem der vorhergehenden Ansprüche, wobei der Ventilkolben mit einer im Steuergehäuse angeordneten Reaktionscheibe in kraftübertragenden Eingriff bringbar ist, die eine Übertragung der Ausgangskraft des Unterdruckbremskraftverstärkers auf ein Kraftabgabeglied (Druckstange) ermöglicht, dadurch **gekennzeichnet**, daß der Ventilkolben (9) an der Reaktionscheibe (6) mittels einer im Steuergehäuse (5) axial begrenzt bewegbar gelagerten Übersetzungscheibe axial anliegt, deren Bewegung entgegen der Betätigungsrichtung des Unterdruckbremskraftverstärkers durch einen im Steuergehäuse (5) ausgebildeten Anschlag begrenzt ist, der eine weitere Bewegung des Ventikolbens (9) entgegen der Betätigungsrichtung zuläßt.

28. Unterdruckbremskraftverstärker nach einem der vorhergehenden Ansprüche, dadurch **gekennzeichnet**, daß das Steuergehäuse 5) zweiteilig ausgebildet ist und ein Vorderteil aufweist, das mit einem das Steuerventil (12) aufnehmenden Führungsteil formschlüssig verbunden ist und das Kraftabgabeglied (Druckstange 14), die Reaktionscheibe (6) sowie die Übersetzungsscheibe aufnimmt.

## Claims

1. A vacuum brake power booster for automotive vehicles having a booster housing (1) whose interior is subdivided into a vacuum chamber (4) and a working chamber (3) by a movable wall (2), further including a control housing (5) carrying the movable wall (2) and accommodating a control valve (12) which controls the pressure differential acting upon the movable wall (2), the control valve being operable by an actuating rod (7) and composed of a first sealing seat (15) provided in the control housing and a second sealing seat (16) provided on the valve piston (9) displaceable by the actuating rod (7), the two sealing seats being arranged concentrically in relation to one another, and an elastically deformable valve member (10), a movable third sealing seat (24) being provided which is operable by an electromagnet (20), which is arranged concentrically in relation to the first and second sealing seats (15, 16) and permits ventilation of the working chamber (3) irrespective of the actuating rod (7), **characterized** in that the electromagnet (20), rigidly coupled to the valve piston (9), is arranged so as to be slidable in the control housing (5) so that the third sealing seat (24) is synchronously movable with the valve piston (9).

2. A vacuum brake power booster as claimed in claim 1, including a push rod (14) transmitting its output force which is supported on the control housing by the intermediary of a rubber-elastic reaction disc (6), **characterized** in that the electromagnet (20) is arranged in a preferably bowl-shaped axial extension (25) of the valve piston (9), the extension being closed by a closure member (30) which, additionally, permits transmitting the input force introduced at the actuating rod (7) to the reaction disc (6).

3. A vacuum brake power booster as claimed in claim 1 or claim 2, **characterized** in that the armature (31) of the electromagnet (20) projects partly into the closure member (30), the force transmission between the third sealing seat (24) and the armature (31) taking place by means of a cylindrical pin (32), to which a force-transmitting plate (33) carrying the third sealing seat (24) is secured.

4. A vacuum brake power booster as claimed in any one of the preceding claims, **characterized** in that the third sealing seat (24) is provided on a ring (34) which is sealedly guided in the control housing (5) and is connected to the force-transmitting plate (33) by means of at least two retaining arms (35), preferably opposed in radial direction.

5. A vacuum brake power booster as claimed in claim 3, **characterized** in that the force-transmitting plate (33) has a rectangular configuration and is arranged in a radial groove (36) in the valve piston (9).

6. A vacuum brake power booster as claimed in any one of the preceding claims, **characterized** in that the third sealing seat (24) is interposed radially between the two sealing seats (15, 16).

7. A vacuum brake power booster as claimed in any one of the preceding claims, **characterized** in that the third sealing seat (24) is arranged in an axially offset manner with respect to the second sealing seat (16).

8. A vacuum brake power booster as claimed in any one of the preceding claims, **characterized** in that the pin (32) is guided in the closure member (30) and in a guide portion (37) arranged in the extension (25) of the valve piston (9).

9. A vacuum brake power booster as claimed in any one of the preceding claims, the valve piston abutting on a stop on the booster housing through a transverse member which is arranged in the control housing with axial play,
characterized in that the third sealing seat (24), in the release position, is arranged at a distance (b) from the valve member (10) which is larger than, or equal to, the distance (a) between the transverse member (11) and a stop surface (39) provided in the control housing (5) and allowing entrainment of the transverse member (11) on actuation.

10. A vacuum brake power booster as claimed in claim 8 or claim 9,
characterized in that a spring (40) is compressed between the armature (31) and the guide portion (37) and biasses the armature (31) in opposition to the actuating direction of the electromagnet (20).

11. A vacuum brake power booster as claimed in the preamble of claim 1,
characterized in that the third sealing seat (24) is operable only to the effect of separating the chambers (3, 4), a valve (41) operable independently of the electromagnet (20) being provided which ventilation of the working chamber (3) irrespective of the control valve (12).

12. A vacuum brake power booster as claimed in claim 11, the booster housing being composed of two interconnected housing halves,
characterized in that the valve (41) is arranged at the housing half (42) confining the working chamber (3).

13. A vacuum brake power booster as claimed in claim 11 or claim 12,
characterized in that valve (41) is provided as a pneumatic solenoid valve which is closed when deenergized.

14. A vacuum brake power booster as claimed in any one of the preceding claims 1 to 10,
characterized in that the valve member (10) in the control housing (5) confines a pneumatic chamber (17), to which the pneumatic pressure prevailing in the working chamber (3) is applied.

15. A vacuum brake power booster as claimed in claim 14,
characterized in that the valve member (10) has at least one passage (19) in the area of its sealing surface which establishes a connection between an annular chamber (43), confined by the sealing seats (15, 16) and connected with the working chamber (3), and the pneumatic chamber (17).

16. A vacuum brake power booster as claimed in claim 14 or claim 15,
characterized in that the valve member (10) has a radially inwardly disposed sealing lip (13) in the area of its sealing surface, which sealing lip, together with a retaining ring (21) holding the valve member (10) in the control housing (5), confines the pneumatic chamber (17).

17. A vacuum brake power booster as claimed in any one of the preceding claims,
characterized in that means (47, 48, 49, 52, 53, 54) are provided which permit detecting the actual position of the valve member (10).

18. A vacuum brake power booster as claimed in claim 17,
characterized in that means (47, 49) are provided which permit direct sensing of the actuating travel of the valve member (10).

19. A vacuum brake power booster as claimed in claim 18,
characterized in that a Hall effect sensor (49) is integrated in the control housing (5), preferably in the area of the first sealing seat (15), and cooperates with a permanent magnet (47) which is arranged in the valve member (10).

20. A vacuum brake power booster as claimed in claim 18,
characterized in that a Hall effect sensor is provided in the valve member (10) and cooperates with a permanent magnet that is arranged in control housing (5), preferably in the area of the first sealing seat (15).

21. A vacuum brake power booster as claimed in claim 17,
characterized in that means (48, 52, 53, 54) are provided which permit indirect sensing of the actuating travel of the valve member (10), preferably sensing of the actuating travel of the armature (31) of the electromagnet (20).

22. A vacuum brake power booster as claimed in claim 21, the third sealing seat being provided on a ring that is sealedly guided in the control housing and is secured to a force-transmitting plate which is in force-transmitting connection with the armature,
characterized in that a permanent magnet (52) is arranged in the force-transmitting plate (33) and cooperates with a Hall effect sensor (52) arranged in the valve piston (9).

**23.** A vacuum brake power booster as claimed in claim 21,
**characterized** in that means (48, 54) are provided which permit sensing the density of the magnetic flux in the working air gap (51) of the electromagnet (20), while the current supplied to the electromagnet (20) is measured simultaneously.

**24.** A vacuum brake power booster as claimed in claim 23, the working air gap of the electromagnet being provided between the armature and a guide portion that is arranged within the valve piston,
**characterized** in that an analogously operating Hall effect sensor (48) is arranged in the guide portion (37) on its side facing the armature (31).

**25.** A vacuum brake power booster as claimed in claim 23,
**characterized** in that a Hall effect sensor (54) is arranged in the return path of the electromagnet (20).

**26.** A vacuum brake power booster as claimed in claim 25, the electromagnet being arranged in an extension of the valve piston,
**characterized** in that the Hall effect sensor (54) is integrated in the wall of the extension (25).

**27.** A vacuum brake power booster as claimed in any one of the preceding claims, wherein the valve piston can be brought into force-transmitting engagement with a reaction disc arranged in the control housing which permits transmission of the output force of the vacuum brake power booster to a force output member (push rod),
**characterized** in that the valve piston (9) is in axial abutment with the reaction disc (6) by means of a transmission disc (61) which is mounted in the control housing (5) so as to be axially movable within limits, the movement of which transmission disc in opposition to the actuating direction of the vacuum brake power booster is limited by a stop (annular surface 62) provided in the control housing (5) and allowing further movement of the valve piston (9) in opposition to the actuating direction.

**28.** A vacuum brake power booster as claimed in any one of the preceding claims,
**characterized** in that the control housing (5) is of bipartite design and includes a front part (63) which is positively connected with a guide portion (64) accommodating the control valve (12), and which accommodates the force output member (push rod 14), the reaction disc (6) and the transmission disc (61).

**Revendications**

**1.** Dispositif d'assistance de freinage à dépression pour des véhicules automobiles, avec un boîtier de servofrein (1) dont l'espace intérieur est divisé par une cloison mobile (2) en une chambre de dépression (4) et une chambre de travail (3), ainsi qu'avec un boîtier de commande (5) portant la cloison mobile (2) et dans lequel est disposée une soupape de commande (12) qui commande la différence de pression agissant sur la cloison mobile, peut être actionnée par une tige d'actionnement (7) et est constituée d'un premier siège d'étanchéité (15) configuré dans le boîtier de commande et d'un deuxième siège d'étanchéité (16) configuré sur un piston de soupape (9) pouvant être déplacé par la tige d'actionnement (7), ces deux sièges d'étanchéité étant disposés concentriquement, ainsi que d'un corps de soupape (10) élastiquement déformable, un troisième siège d'étanchéité mobile (24) étant prévu, pouvant être actionné par un électro-aimant (20) et disposé concentriquement aux deux premiers sièges d'étanchéité (15, 16), qui permet une mise à l'air de la chambre de travail (3) indépendamment de la tige d'actionnement (7), **caractérisé** en ce que l'électro-aimant (20) est disposé de manière coulissante dans le boîtier de commande (5) en étant fixé au piston de soupape (9), de sorte que le troisième siège d'étanchéité (24) peut être déplacé en synchronisme avec le piston de soupape (9).

**2.** Dispositif d'assistance de freinage à dépression selon la revendication 1, avec une tige de pression (14), transmettant sa force de sortie, qui s'appuie contre le boîtier de commande avec intercalation d'une rondelle de réaction (6) ayant l'élasticité du caoutchouc, **caractérisé** en ce que l'électroaimant (20) est disposé dans un prolongement axial (25) du piston de soupape (9), de préférence en forme de pot et fermé par un obturateur (30) qui permet simultanément de transmettre sur la rondelle de réaction (6) la force d'entrée introduite par la tige d'actionnement (7).

**3.** Dispositif d'assistance de freinage à dépression selon la revendication 1 ou 2, **caractérisé** en ce que l'induit (31) de l'électro-aimant (20) pénètre partiellement dans l'obturateur (30), la transmission de force entre le troisième siège d'étanchéité (24) et l'induit (31) s'effectuant au moyen d'une broche cylindrique (32) sur laquelle est fixée une plaque de transmission de force (33) portant le troisième siège d'étanchéité (24).

**4.** Dispositif d'assistance de freinage à dépression selon l'une quelconque des revendications précédentes, **caractérisé** en ce que le troisième siège d'étanchéité (24) est configuré sur une bague (34), qui est guidée en étanchéité dans le boîtier de commande (5) et qui est assemblée à la plaque de transmission de force (33) au moyen d'au moins deux bras de fixation (35), de préférence radialement opposés.

5. Dispositif d'assistance de freinage à dépression selon la revendication 3, **caractérisé** en ce que la plaque de transmission de force (33) est réalisée rectangulaire et est disposée dans une rainure radiale (36) pratiquée dans le piston de soupape (9).

6. Dispositif d'assistance de freinage à dépression selon l'une quelconque des revendications précédentes, **caractérisé** en ce que le troisième siège d'étanchéité (24) est disposé radialement entre les deux sièges d'étanchéité (15, 16).

7. Dispositif d'assistance de freinage à dépression selon l'une quelconque des revendications précédentes, **caractérisé** en ce que le troisième siège d'étanchéité (24) est disposé en décalage axial par rapport au deuxième siège d'étanchéité (16).

8. Dispositif d'assistance de freinage à dépression selon l'une quelconque des revendications précédentes, **caractérisé** en ce que la broche (32) est guidée dans l'obturateur (30) ainsi que dans un élément de guidage (37) disposé dans le prolongement (25) du piston de soupape (9).

9. Dispositif d'assistance de freinage à dépression selon l'une quelconque des revendications précédentes, le piston de soupape s'appliquant contre une butée solidaire du boitier de servofrein par l'intermédiaire d'un organe transversal disposé avec jeu axial dans le boîtier de commande, **caractérisé** en ce que le troisième siège d'étanchéité (24) est, dans la position de relâchement, disposé à une distance (b) du corps de soupape (10) qui est supérieure ou égale à la distance (a) entre l'organe transversal (11) et une face de butée (39), configurée dans le boîtier de commande (5) et permettant que l'organe transversal (11) soit entraîné lors de l'actionnement.

10. Dispositif d'assistance de freinage à dépression selon la revendication 8 ou 9, **caractérisé** en ce qu'un ressort (40), qui précontraint l'induit (31) à l'encontre de la direction d'actionnement de l'électro-aimant (20), est disposé entre l'induit (31) et l'élément de guidage (37).

11. Dispositif d'assistance de freinage à dépression selon le préambule de la revendication 1, **caractérisé** en ce que le troisième siège d'étanchéité (24) ne peut être actionné qu'au sens d'une séparation des chambres (3, 4), une soupape (41) asservissable indépendamment de l'électroaimant (20) étant prévue, qui permet une mise à l'air de la chambre de travail (3) indépendamment de la soupape de commande (12).

12. Dispositif d'assistance de freinage à dépression selon la revendication 11, le boîtier de servofrein étant constitué de deux moitiés de boîtier mutuellement assemblées, **caractérisé** en ce que la soupape (41) est disposée sur la moitié de boitier (42) délimitant la chambre de travail (3).

13. Dispositif d'assistance de freinage à dépression selon la revendication 11 ou 12, **caractérisé** en ce que la soupape (41) est une soupape pneumatique à actionnement électromagnétique, fermée en l'absence de courant.

14. Dispositif d'assistance de freinage à dépression selon l'une quelconque des revendications précédentes 1 à 10, **caractérisé** en ce que le corps de soupape (10) délimite dans le boîtier de commande (5) une chambre pneumatique (17) qui est alimentée avec la pression pneumatique régnant dans la chambre de travail (3).

15. Dispositif d'assistance de freinage à dépression selon la revendication 14, **caractérisé** en ce que le corps de soupape (10) présente, dans la région de sa face d'étanchéité, au moins un passage (19) qui constitue une liaison entre une chambre annulaire (43), délimitée par les sièges d'étanchéité (15, 16) et reliée à la chambre de travail (3), et la chambre pneumatique (17).

16. Dispositif d'assistance de freinage à dépression selon la revendication 14 ou 15, **caractérisé** en ce que le corps de soupape (10) présente, dans la région de sa face d'étanchéité, une lèvre d'étanchéité radialement intérieure (13), qui délimite la chambre pneumatique (17) conjointement avec une bague de maintien (21) maintenant le corps de soupape (10) dans le boîtier de commande (5).

17. Dispositif d'assistance de freinage à dépression selon l'une quelconque des revendications précédentes, **caractérisé** en ce que des moyens (47, 48, 49, 52, 53, 54) sont prévus, qui permettent de reconnaître la position actuelle du corps de soupape (10).

18. Dispositif d'assistance de freinage à dépression selon la revendication 17, **caractérisé** en ce que des moyens (47, 49) sont prévus, qui permettent une détection directe de la course d'actionnement du corps de soupape (10).

19. Dispositif d'assistance de freinage à dépression selon la revendication 18, **caractérisé** en ce qu'un capteur à effet Hall (49) est intégré dans le boîtier de commande (5), de préférence dans la région du premier siège d'étanchéité (15), capteur qui coopère avec un aimant permanent (47) disposé dans le corps de soupape (10).

20. Dispositif d'assistance de freinage à dépression selon la revendication 18, **caractérisé** en ce qu'un capteur à effet Hall est prévu dans le corps de soupape (10), capteur qui coopère avec un aimant permanent disposé dans le boîtier de commande (5), de préférence dans la région du premier siège d'étanchéité (15).

21. Dispositif d'assistance de freinage à dépression selon la revendication 17, **caractérisé** en ce que des moyens (48, 52, 53, 54) sont prévus, qui permettent une détection indirecte de la course d'actionnement du corps de soupape (10), de préférence une détection de la course d'actionnement de l'induit (31) de l'électro-aimant (20).

22. Dispositif d'assistance de freinage à dépression selon la revendication 21, le troisième siège d'étanchéité étant configuré sur une bague qui est guidée en étanchéité dans le boîtier de commande et est fixée sur une plaque de transmission de force qui se trouve en liaison de transmission de force avec l'induit, **caractérisé** en ce qu'un aimant permanent est prévu dans la plaque de transmission de force (33), aimant qui coopère avec un capteur à effet Hall (52) disposé dans le piston de soupape (9).

23. Dispositif d'assistance de freinage à dépression selon la revendication 21, **caractérisé** en ce que des moyens (48, 54) sont prévus, qui permettent une détection de la densité du flux magnétique dans l'entrefer de travail (51) de l'électro-aimant (20) en mesurant simultanément le courant apporté à l'électro-aimant (20).

24. Dispositif d'assistance de freinage à dépression selon la revendication 23, l'entrefer de travail de l'électro-aimant étant configuré entre l'induit et un élément de guidage disposé à l'intérieur du piston de soupape, **caractérisé** en ce qu'un capteur à effet Hall (48) travaillant analogiquement est disposé dans l'élément de guidage (37), sur son côté tourné vers l'induit (31).

25. Dispositif d'assistance de freinage à dépression selon la revendication 23, **caractérisé** en ce qu'un capteur à effet Hall (54) est disposé sur l'arrière de l'électro-aimant (20).

26. Dispositif d'assistance de freinage à dépression selon la revendication 25, l'électro-aimant étant disposé dans un prolongement du piston de soupape, **caractérisé** en ce que le capteur à effet Hall (54) est intégré dans la paroi du prolongement (25).

27. Dispositif d'assistance de freinage à dépression selon l'une quelconque des revendications précédentes, le piston de soupape pouvant être amené en engagement de transmission de force avec une rondelle de réaction disposée dans le boîtier de commande, laquelle permet de transmettre la force de sortie du dispositif d'assistance de freinage à dépression sur un organe de délivrance de force (tige de pression), **caractérisé** en ce que le piston de soupape (9) s'applique axialement contre la rondelle de réaction (6) par l'intermédiaire d'une rondelle de transmission (61), montée à déplacement axial limité dans le boîtier de commande (5) et dont le déplacement à l'encontre de la direction d'actionnement du dispositif d'assistance de freinage à dépression est limité par une butée (face annulaire 62) configurée dans le boîtier de commande (5), laquelle autorise la poursuite du déplacement du piston de soupape (9) à l'encontre de la direction d'actionnement.

28. Dispositif d'assistance de freinage à dépression selon l'une quelconque des revendications précédentes, **caractérisé** en ce que le boîtier de commande (5) est réalisé en deux parties et présente une partie avant (63), qui est assemblée par complémentarité de forme à une partie de guidage (67) logeant la soupape de commande (12) et qui loge l'organe de délivrance de force (tige de pression 14), la rondelle de réaction (6) et la rondelle de transmission (61).

Fig. 1

Fig. 2

Fig. 3

Fig. 4

Fig. 5